# EUROPEAN PATENT SPECIFICATION

(11) **EP 0 318 122 B1**
(45) Date of publication and mention of the grant of the patent: **09.06.1993**
(21) Application number: 88202682.6
(22) Date of filing: 24.11.1988
(51) Int. Cl.: F02C 3/36, F02C 7/08, F02C 3/10, F02C 6/00

(54) **Gas turbine cycle**
Gasturbinenprozess
Cycle de turbine à gaz

(30) Priority: 26.11.1987 NL 8702834
(43) Date of publication of application: 31.05.1989
(73) Proprietor: TURBO CONSULT B.V., NL-6881 VN Velp (NL)
(72) Inventor: Hendriks, Rudolf, Ir., NL-6881 VN Velp (NL)
(74) Representative: Mathol, Heimen, Ir.

(56) References cited:
- EP-A- 0 036 402
- CH-A- 411 462
- DE-A- 3 021 812
- DE-C- 732 981
- DE-C- 873 015
- GB-A- 628 697
- GB-A- 720 436
- NL-C- 54 111
- NL-C- 57 180
- US-A- 2 407 166
- US-A- 3 054 257

## Description

The invention relates to a plant for the generation of mechanical energy by means of a gaseous fluid comprising an assembly made up of a power turbine and a compressor unit, driven by at least one individual compressor turbine, the inlet of which is connected in series fluid flow relationship to the compressor unit by means of a connecting conduit which is being connected to one heat exchange side of a recuperator, the other heat exchange side of said recuperator being connected to the exhaust side of the power turbine, for recuperation of heat from the power turbine exhaust gases to the compressed air during operation of the gas turbine plant.

Such a plant is known from US - A - 3 054 257. In this known power plant for a vehicle, the compressed air after its heat exchange with a recuperator, is subjected to a termo-dynamic cycle comprising an additional heat exchanger and two combustion chambers which are both coupled to a throttle linkage mechanism. The main aim of this known plant is to reduce its specific fuel consumption. No specific attention is paid to reach an acceptable efficiency level (± 35 %) which can compete with the conventional motive power units such as internal combustion engines, steam turbines etc.

A second factor of importance relative to this prior art plant consists in that one has also omitted to pay sufficient attention to the noxious exhaust fumes of the gasturbine. In US - A - 3 054 257 it is proposed to add a combustion chamber to the compressor turbine in order to increase the temperature of the gaseous fluid. This latter measure enhances the emission of noxious combustion products.

The object of the invention is to improve both above factors (efficiency and clean operation) and to produce a plant which operate with an efficiency of around 40 % in the region between 50 and 3000 kW, thereby limiting noxious emissions. A conceivable use for the envisaged plant is e.g. the driving of trains or ships with a plant which can supply power of the order of 700 kW. The plant according to the invention is distinguished in that it comprises said recuperator being the source of heat for the compressed air flowing from the compressor unit to the compressor turbine, said plant further comprising only one combustion chamber directly connected to the power turbine for combustion of fuel in the compressed air.

One important feature of the above-described invention is that the drive turbines of the compressor are not fed by the exhaust gases of the gas turbine, but that the compressed air itself is used for this before being taken to the power turbine. The invention thus permits operation which comes closer to the theoretical CARNOT cycle than has been achievable hitherto. This lays the foundation for a fundamental increase of the thermal efficiency of the whole plant. Moreover, through the invention important elements of the plant can be purchased ready-made as existing and already sophisticated units, which is extremely important for the cost of the whole plant.

There are two further advantages of the invention. Besides the better approximation of the CARNOT-cycle and the composition (assembly) out of element competitively purchasable on the market, the proposed new plant renders a very "clean" operation possible, internally as well as externally. The compressors and the turbines belonging thereto are traversed by completely unpolluted air (consequently little or no internal pollution). The gaseous fluid feeded to the combustion chamber of the power turbine needs to have a very low pressure (in the order of 200 kPa) and related thereto will have a relative low inlet temperature at the power turbine (in the order of 900°C). Under those circumstances the NOx emission is very low so that the burden put on the environment is reduced.

From DE-A-3 021 812 (page 2, line 17 - page 3, line 18; figure 1) it is known to compress air in compressors (1-3), heat one portion of the air with exhaust heat from a power turbine (7) in the heat exchangers (9, 10) and to expand the so heated air in the turbines (11, 13, 15) for driving the compressors (1-3) after which this portion of the expanded air is discharged into the atmosphere. The other portion of the compressed air is passed through a jet compressor (4) for sucking additional air which is then passed through an auxilliary combustion chamber (6) to the power turbine (7). The exhaust is flowing through said heat exchangers (9, 11) for heating the first portion of the compressed air.

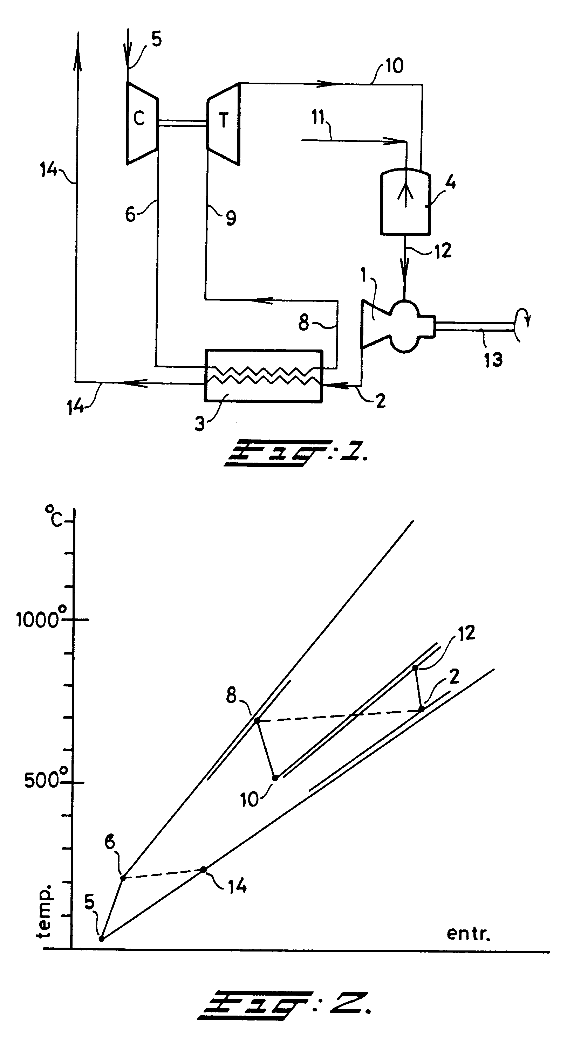

From R. Kehlhofer et al.: "Gasturbinenkraftwerke, Kombikraftwerke, Heiskraftwerke und Industriekraftwerke", Technischer Verlag Resch, Verlag TÜV Rheinland, (pages 61 and 76, figure 1.39, with the T-s-diagram, and figure 1.55) it is known to expand air in a high pressure turbine and to supply external heat in a combustion chamber before a low pressure turbine and to heat the air going to the high pressure turbine with the exhaust heat from the low pressure turbine. There is no separate power turbine, as the plant mainly serves for the temporary storage of air compressed by an additional compressor unit.

If the compressor unit of the plant according to the invention consists of at least two parts, a further improvement in efficiency can be obtained by having at least one additional heat exchanger in the conduit between parts of the compressor-unit. It is pointed out that where mention is made of heat exchangers, they can be of the recuperative or the regenerative type.

The invention is also embodied in the use of the above described plant by its application to the total energy operation in a greenhouse for flowers and vegetables. Clean fuel (f.i. natural gas from Groningen, the Netherlands) is supplied to the combustion chamber. According to this aspect of the invention, the pressure and the temperature in the combustion chamber are maintained at a very low level by adapting the supply of clean fuel to the combustion chamber; at the same time involving the necessary external heat exchangers to achieve the predetermined ratio (H/P) between thermal and mechanical power given off, the cooled exhaust gases from the power turbine being released in the greenhouse. By these measures the C0₂ gas is used for the benefit of the process for assimilation of carbon dioxyde in the plants. It is further rendered possible to determine the heat output indepedently of the required mechanical power, and vice versa. The plant is therefore exceptionally well suited for use in varying circumstances as regards the demand for mechanical power and/or heat.

The invention will be explained in greater detail with reference to the drawing, which shows a number of embodiments of the plant and the accompanying graphs.

Fig. 1 shows a schematic illustration of the plant, while Fig. 2 gives the accompanying T-S graph.

Fig. 3 shows a first variant with an additional heating stage between the to compressor turbines used, while Fig. 4 shows the accompanying T-S graph.

Fig. 5 shows schematically a total energy application of the plant.

Fig. 6 is a longitudinal section of a very roughly illustrated centripetal power turbine.

The plant shown in Fig. 1 comprised an assembly made up of a compressor unit C, which in this case consists of a single compressor. The assembly also contains a gas turbine 1 which provides the net energy becoming available, said turbine being indicated as a power turbine. This power turbine has an exhaust 2, into which a main heat exchanger 3 is incorporated. The compressor unit C is driven by a separate compressor turbine T. The power turbine 1 is provided with a combustion chamber 4 shown separately in Fig. 1. The compressor C is provided with a suction conduit 5 and a delivery conduit 6, which via the main heat exchanger 3 and a conduit 9 leads to the compressor turbine T, the exhaust of which is connected by means of a conduit 10 to the combustion chamber 4.

It will be clear that the compressor unit C is connected in series by means of the connecting conduits 6, 8 and 9 to the compressor turbine T. Through the main heat exchanger 3, the temperature of the compressed air coming from the compressor unit C is increased further. As a result, the turbine T can supply sufficient power for the compressor C. The thus spent and still compressed air flows through the conduit 10 to the combustion chamber 4, while fuel is injected through a conduit 11 into this chamber 4 and is brought to combustion. The low-pressure gas mixture thus obtained flows through the conduit 12 to the power turbine 1 for the release of mechanical energy through the shaft 13. The exhaust 2 of the power turbine 1 is discharged through a conduit 14 after passing through the main heat exchanger 3.

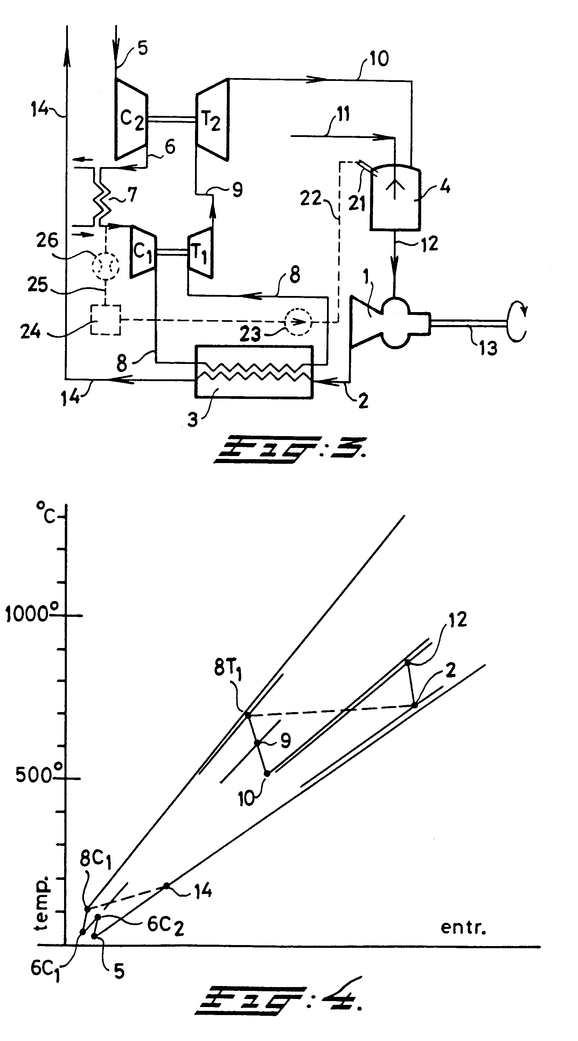

The process taking place within the plant according to Fig. 1 is shown schematically in the T-S graph according to Fig. 2. This shows clearly the special advantage of the measure which is essential for the plant according to Fig. 1, namely that the compressor turbine T is not driven, as has often been proposed, by the exhaust gases of the power turbine, but that it is driven by the compressed air from the compressor unit C, after said air is further heated through heat exchange with the exhaust gases of the power turbine. This means that the graph shown in Fig. 2 is much closer to the configuration of the (ideal) CARNOT cycle. The expansion ranges of the cycle lie near the region with the highest temperature, which has a favourable influence on the efficiency of the plant.

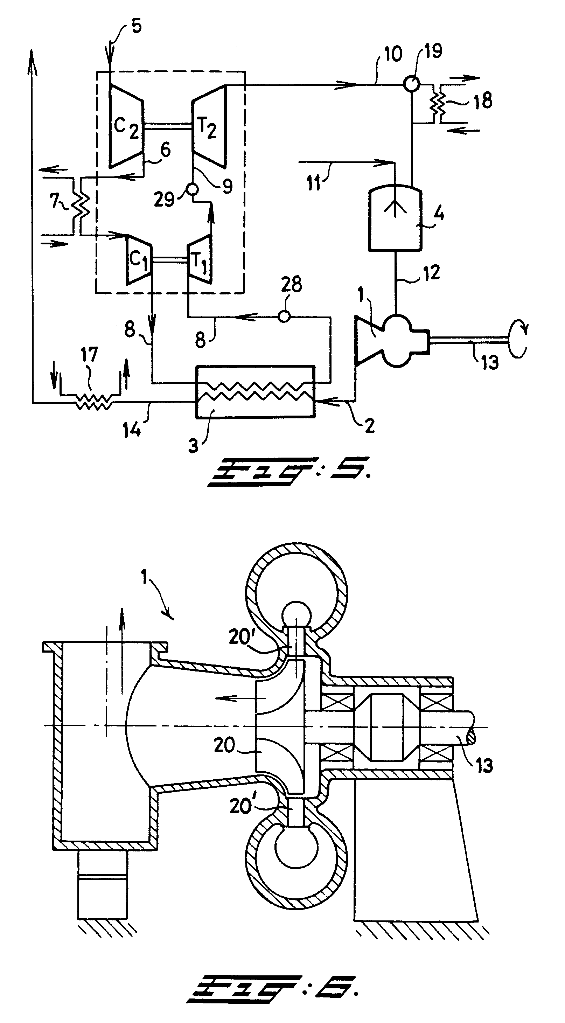

The embodiment according to Fig. 3 shows the compressor-unit materialized with a low pressure compressor C₂ and a high pressure compressor C₁ each being individually driven by a turbine T₂ and T₁ respectively. Further a heat exchanger 7 or cooler is provided in the connecting conduit 6 between the compressor parts C₂ and C₁. Fig. 4 shows the accompanying T-S diagram.

In order to give an idea, a number of figures for an imaginary plant of the type shown in Fig. 3 for a net power of 700 kW follow below:

| | |
|---|---|
| inlet temp. C₂ | 15°C |
| outlet temp. C₂ | 114°C |
| outlet pressure C₁ | 250 kPa |
| inlet temp. C₁ | 30°C |
| outlet temp. C₁ | 139°C |
| outlet pressure C₁ | 610 kPa |
| increase temp.traject of air in heat exch,3 | 560°C |
| decrease do. of exhaust gas in do | 545°C |
| pressure ratio over T₁ | = 1.6 |
| temp. in conduit 9 | 605°C |
| pressure ratio over T₂ | = 1.82 |
| temp. in conduit 10 | 510°C |
| temp. in conduit 12 | 890°C |
| pressure in do. | 200 kPa |
| power in shaft 13 | approx. 700 kW |
| temp. in conduit 2 | 730°C |

In Fig. 3 an additional provision is represented in dotted lines, consisting of an injector 21 in the combustion chamber 4. A feed duct 22 with a pump 23 connects this injector with a storage tank 24 for filtrated condensate. This condensate originates from the portion of the connecting conduit 6 lying within or beyond the heat exchanger 7. A discharge duct 25 feeds the condensate through a throttle valve 26 to the storage tank 24. The water or steam injection into the combustion chamber 4 rendered feasible herewith, brings about a further decrease of the N0ₓ emission. The feed duct 22 may run through the heat exchanger 3 in order to heat the condensate to steam. In its application to a horticultural enterprise (market-gardening), the obtained condensate can be profitably used for spray water.

Fig. 5 is a schematic illustration of a plant which is suitable in particular for total energy operation. The purpose of this operation is to increase the efficiency of the plant still further through the use of a number of external heat exchangers, in addition to the existing heat exchanger 7 which acts as an intermediate cooler of the compressor unit C. A first added external heat exchanger 18 is located in the outgoing conduit 10 of the last compressor turbine T₂, upstream of the combustion chamber 4 of the power turbine 1.

In the conduit 10 a three-way valve 19 is further provided. The quantity of compressed air fed directly to the power turbine can be regulated with this valve, while the remaining air flows through the heat exchanger 18. In one end position of the valve 19 all compressed air flows directly via the conduit 10 to the combustion chamber 4, while in the other end position all air is fed through the heat exchanger 18 and subsequently reaches the combustion chamber 4. Through the correct regulation of the valve 19 and of the fuel feed in the conduit 11 and by the activation of the external heat exchangers 17, 18, a predetermined h/p ratio can be achieved between the thermal power given off in the heat exchangers 7, 17 and 18 and the mechanical power delivered through the shaft 13.

Fig. 5 also shows additional means 28 and 29 provided in the conduit 8, 9 for influencing the temperature in the turbines T₁ and T₂. When the plant is applied for generating electricity f.i. in a hospital, a sudden change in the load of the shaft 13 of the power turbine 1 is often experienced. When the load is raised, the fuel supply through the conduit 11 is increased and the temperature in the exhaust 2 will rise. Due to its high thermal inertia, the main heat exchanger 3 will only with some delay, transmit this temperature increase to the fluid previously compressed by the compressors C₁ and C₂. Consequently the rotational speed of the turbines T₁ and T₂ will not immediately change, nor does the speed of the compressors C₁ and C₂. This delayed reaction of the compressor unit may cause instability in the operation of the whole plant. To avoid this phenomenon, the means 28, 29 enter into action by supplying a small amount of heat (e.g. through auxiliary burners or electrical heating elements, not shown) to the fluid prior to its entry into the turbine T₁ and T₂ respectively. As the compressor unit has a low GD² value,
it reacts immediately thus avoiding the above-mentioned instability. The additional means 28, 29 are also capable of preventing instability during a drop of load in the shaft 13 of the power turbine 1.

Fig. 6 shows a single-flow centripetal turbine which can be used as the power turbine 1 in the plant according to Figs. 1, 3 and 5. The advantage of such a type of turbine is, inter alia, that the gases can be supplied at a very high temperature, because before reaching the moving blades 20 a temperature drop of about 100 degrees centigrades is obtained.

This turbine also makes it possible to deliver a plant for a mechanical capacity which differs by up to 40% from the capacity for which the plant is designed, while maintaining the thermal efficiency. For this, the angle of the guide blades 21 can be changed in the factory. In the example given above of a 700 kW-plant, this means that with the same elements a plant can be assembled from approx. 400 kW to 1000 kW with virtually the same thermal efficiency.

An important application of the plant lies in the field of market-gardening, in which one has a need for the following combination:
- mechanical power for the generation of electricity or for energizing of pumps and the like;
- calories for the heating of the internal space of a hothouse;
- additional C0₂ supply in connection with plant growth.
All this can be obtained with the above described plant in which the exhaust fumes are favourably distinguished by their very low contents of N0ₓ, carbon monoxyde and unburned hydrocarbons.

## Claims

1. Plant for the generation of mechanical energy by means of a gaseous fluid, comprising an assembly made up of a power turbine (1) and a compressor unit (C) driven by at least one individual compressor turbine (T), the inlet of which is connected in series fluid flow relationship to the compressor unit by means of a connecting conduit (6, 8, 9) which is being connected to one heat exchange side of a recuperator (3), the other heat exchange side of said recuperator being connected to the exhaust side of the power turbine for recuperation of heat from the power turbine exhaust gases to the compressed air during operation of the gas turbine plant,
**characterized in that** the heating of the compressed air flowing from the compressor unit (C) to the compressor turbine(s) (T,T1 or T2) takes place in the said recuperator (3),
the compressed and heated air expanded in said compressor turbine(s) (T,T1 or T2) being unpolluted,
exclusively the gas turbine (1) is provided with a combustion chamber (4) for combustion of fuel in the compressed air,
the discharge of the expanded and unpolluted air from the (last) compressor turbine (T or T2) being connected to this combustion chamber (4).

2. Plant according to Claim 1, in which the compressor unit consists of at least two parts, characterized in that at least one additional heat exchanger (7) is provided in the connecting conduit (6) between the parts (C₁, C₂) of the compressor-unit.

3. Plant according to Claim 1 or 2, characterized in that the power turbine (1) is designed as a single-flow centripetal turbine.

4. Plant according to one of the preceding claims, characterized in that in addition to the heat exchanger (7) as the interim cooler in the compressor unit (C) it has at least one other external heat exchanger (17,18) in the exhaust (14) of the gas turbine (1) downstream of the existing recuperator (3), and also in the outgoing conduit (10) of the last compressor turbine (T2) upstream of the combustion chamber (4) of the power turbine (1).

5. Plant according to any of the Claims 2-4, characterized in that an injector (21) is provided in the combustion chamber (4) said injector being connected to a storage tank (24) for water through a duct (22) and a pump (23), which tank is connected with the portion of the connecting conduit (6) that is cooled in the heat-exchanger (7).

6. Plant according to any of the Claims 2-5,
characterized in that additional means (28,29) are provided in the connecting conduit (8,9) downstream the recuperator (3) for influencing the temperature of the gaseous fluid streaming through this conduit towards the compressor turbine(s) (T or T₁, T₂).

7. Using the plant according to anyone of the preceding claims by its application to the total energy operation in a greenhouse,
**characterized in that** the pressure and the temperature in the combustion chamber are maintained at a very low level by adapting the supply of clean fuel to the combustion chamber; at the same time involving the necessary external heat exchangers to achieve the predetermined ratio (H/P) between thermal and mechanical power given off, the cooled combustion gases from the power turbine being supplied into the greenhouse.

8. The use according to claim 7,
**characterized in that** the compressor-unit from the plant is operated such that the pressure within the combustion chamber of the power turbine lies in the order of 200 kPa, the temperature in this combustion chamber being kept in the order of 900°C.

## Patentansprüche

1. Anlage zur Erzeugung mechanischer Energie mittels eines gasartigen Fluids, mit einer Einrichtung, die aus einer Leistungsturbine (1) und einer Kompressoreinheit (C) aufgebaut ist, die durch zumindest eine eigene Kompressorturbine (T) angetrieben ist, deren Einlaß bezüglich des Fluidstromes mit der Kompressoreinheit mittels einer Verbindungsleitung (6, 8, 9) in Reihe geschaltet ist, die mit der einen Wärmetauscherseite eines Rekuperators (3) verbunden ist, wobei die andere Wärmetauscherseite des genannten Rekuperators mit der Auslaßseite der Leistungsturbine verbunden ist, um von den Abgasen der Leistungsturbine Wärme für die komprimierte Luft während des Betriebs der Gasturbinenanlage zurückzugewinnen, dadurch gekennzeichnet, daß das Erhitzen der komprimierten Luft, die von der Kompressoreinheit (C) zu der (den) Kompressorturbine (n) (T, T1 oder T2) strömt, in dem genannten Rekuperator (3) stattfindet,
die komprimierte und erhitzte Luft, die in der (den) Kompressorturbine (n) (T, T1 oder T2) expandiert, verunreinigungsfrei ist,
ausschließlich die Gasturbine (1) mit einer Brennkammer (4) zur Verbrennung von Brennstoff in der komprimierten Luft versehen ist,
der Ausstoß der expandierten und verunreinigungsfreien Luft von der (letzten) Kompressorturbine (T oder T2) mit dieser Brennkammer (4) verbunden ist.

2. Anlage nach Anspruch 1, bei der die Kompressoreinheit aus zumindest zwei Teilen besteht, dadurch gekennzeichnet, daß zumindest ein zusätzlicher Wärmetauscher (7) in der Verbindungsleitung (6) zwischen den Teilen (C₁, C₂) der Kompressoreinheit vorgesehen ist.

3. Anlage nach Anspruch 1 oder 2, dadurch gekennzeichnet, daß die Leistungsturbine (1) als eine Einstrom-Zentripetalturbine ausgelegt ist.

4. Anlage nach einem der vorausgehenden Ansprüche, dadurch gekennzeichnet, daß sie zusätzlich zu dem Wärmetauscher (7), als dem Zwischenkühler in der Kompressoreinheit (C), zumindest einen weiteren externen Wärmetauscher (17, 18) im Abgas (14) der Gasturbine (1) stromabwärts des vorhandenen Rekuperators (3) und ebenfalls in der nach außen führenden Leitung (10) der letzten Kompressorturbine (T2) stromaufwärts der Brennkammer (4) der Leistungsturbine (1) aufweist.

5. Anlage nach einem der Ansprüche 2 bis 4, dadurch gekennzeichnet, daß ein Injektor (21) in der Brennkammer (4) vorgesehen ist, wobei der genannte Injektor mit einem Vorratstank (24) für Wasser über eine Leitung (22) und eine Pumpe (23) in Verbindung ist, welcher Tank mit demjenigen Teil der Verbindungsleitung (6) verbunden ist, der im Wärmetauscher (7) gekühlt wird.

6. Anlage nach einem der Ansprüche 2 bis 5, dadurch gekennzeichnet, daß zusätzliche Mittel (28, 29) in der Verbindungsleitung (8, 9) stromabwärts des Rekuperators (3) vorgesehen sind, um die Temperatur des gasartigen Fluids zu beeinflussen, das durch diese Leitung zu der (den) Kompressorturbine (n) (T oder T1, T2) strömt.

7. Verwendung der Anlage nach einem der vorausgehenden Ansprüche durch ihre Anwendung für die Gesamtenergieversorgung bei einem Gewächshaus, dadurch gekennzeichnet, daß der Druck und die Temperatur in der Brennkammer auf einem sehr niedrigen Pegel gehalten werden, indem die Zufuhr sauberen Brennstoffes zur Brennkammer angepaßt wird, während gleichzeitig die nötigen externen Wärmetauscher beteiligt werden, um das vorbestimmte Verhältnis (H/P) zwischen abgegebener thermischer und mechanischer Energie zu erreichen, wobei die gekühlten Verbrennungsgase von der Leistungsturbine in das Gewächshaus zugeführt werden.

8. Verwendung nach Anspruch 7, dadurch gekennzeichnet, daß die Kompressoreinheit der Anlage so betrieben wird, daß der Druck innerhalb der Brennkammer der Leistungsturbine in der Größenordnung von 200kPa liegt, wobei die Temperatur in dieser Brennkammer in der Größenordnung von 900°C gehalten wird.

## Revendications

1. Installation pour la production d'énergie mécanique au moyen d'un fluide gazeux, comprenant un ensemble constitué par une turbine motrice (1) et une unité de compression (C) actionnée par au moins une turbine à compresseur individuel (T), dont l'entrée est reliée par liaison fluide en série à l'unité de compression au moyen d'une tuyauterie de liaison (6, 8, 9) qui est reliée à un côté échangeur de chaleur d'un récupérateur (3), l'autre côté échangeur de chaleur dudit récupérateur étant relié à l'échappement de la turbine motrice pour le transfert de chaleur à partir des gaz d'échappement de la turbine motrice à l'air comprimé pendant la marche de l'installation à turbine à gaz,
caractérisé en ce que le chauffage de l'air comprimé s'écoulant de l'unité de compression (C) vers la (les) turbine(s) à compresseur (T, T1 ou T2) a lieu dans ledit récupérateur (3),
l'air comprimé et chauffé détendu dans ladite (lesdites) turbine(s) à compresseur (T, T1 ou T2) étant non pollué,
la turbine à gaz (1) exclusivement étant munie d'une chambre de combustion (4) pour la combustion d'un combustible dans l'air comprimé,
l'évacuation de l'air détendu et non pollué de la (dernière) turbine à compresseur (T ou T2) étant reliée à cette chambre de combustion (4).

2. Installation selon la revendication 1, dans laquelle l'unité de compression consiste au moins en deux parties, caractérisée en ce que la tuyauterie de liaison (6) est munie d'au moins un échangeur de chaleur (7) supplémentaire entre les parties (C1 , C2) de l'unité de compression.

3. Installation selon l'une des revendications 1 ou 2, caractérisée en ce que la turbine motrice (1) est conçue sous forme d'une turbine centripète à flux unique.

4. Installation selon l'une des revendications précédentes, caractérisée en ce que, en plus de l'échangeur de chaleur (7) comme refroidisseur intermédiaire dans l'unité de compression (C), elle possède au moins un autre échangeur de chaleur externe (17, 18) dans l'échappement (14) de la turbine à gaz (1) en aval du récupérateur existant (3) et également sur la tuyauterie de sortie (10) de la dernière turbine à compression (T2) en amont de la chambre de combustion (4) de la turbine motrice (1).

5. Installation selon l'une quelconque des revendications 2 à 4, caractérisée en ce qu'un injecteur (21) est présent dans la chambre de combustion (4), ledit injecteur étant relié à un réservoir de stockage (24) d'eau par une tuyauterie (22) et une pompe (23), ledit réservoir étant relié à la portion de la tuyauterie de liaison (6) qui est refroidie dans l'échangeur de chaleur (7).

6. Installation selon l'une quelconque des revendications 2 à 5, caractérisée en ce que la tuyauterie de liaison (8, 9) est munie de moyens supplémentaires (28, 29) en aval du récupérateur (3) pour influencer la température du fluide gazeux s'écoulant à travers cette tuyauterie vers la (les) turbine(s) à compresseur (T ou T1, T2).

7. Utilisation d'une installation selon l'une quelconque des revendications précédentes pour son application au traitement complet de l'énergie dans une serre,
caractérisée en ce que la pression et la température dans la chambre de combustion sont maintenues à un niveau très bas par l'adaptation de l'alimentation en combustible propre à la chambre de combustion ; mettant en oeuvre en même temps les échangeurs de chaleur externes nécessaires pour obtenir le rapport (H/P) prédéterminé entre la puissance thermique et mécanique émise, les gaz de combustion refroidis de la turbine motrice étant fournis à la serre.

8. Utilisation selon la revendication 7,
caractérisée en ce que l'unité de compression de l'installation est actionnée de telle manière que la pression dans la chambre de combustion de la turbine motrice soit de l'ordre de 200 kPa, la température dans cette chambre de combustion étant maintenue à environ 900°C.
